(19) Europäisches Patentamt
European Patent Office
Office européen des brevets

(11) Veröffentlichungsnummer: 0 348 744
A2

(12) # EUROPÄISCHE PATENTANMELDUNG

(21) Anmeldenummer: 89110850.8

(51) Int. Cl.4: C07F 7/18 , C08F 30/08

(22) Anmeldetag: 15.06.89

(30) Priorität: 28.06.88 DE 3821745

(43) Veröffentlichungstag der Anmeldung: 03.01.90 Patentblatt 90/01

(84) Benannte Vertragsstaaten: DE FR GB IT NL

(71) Anmelder: BAYER AG

D-5090 Leverkusen 1 Bayerwerk(DE)

(72) Erfinder: Leitz, Edgar, Dr.
Goethestrasse 63
D-4047 Dormagen(DE)
Erfinder: Buysch, Hans-Josef, Dr.
Brandenburger Strasse 28
D-4150 Krefeld(DE)
Erfinder: Bottenbruch, Ludwig, Dr.
Wöhlerstrasse 5
D-4150 Krefeld(DE)
Erfinder: Ott, Karl-Heinz, Dr.
Paul-Klee-Strasse 54
D-5090 Leverkusen(DE)

(54) **Trialkylsilyloxy-1,1-diphenyl-ethylene und damit hergestellte Polymere.**

(57) Trialkylsilyloxy-1,1-diphenylethylene der allgemeinen Formel I und damit hergestellte neue Polymere mit Aryl-trialkyl-silyl-ether- oder phenolischen Hydroxyl-Endgruppen und ein Verfahren zur Herstellung dieser Polymeren durch anionische Polymerisation.

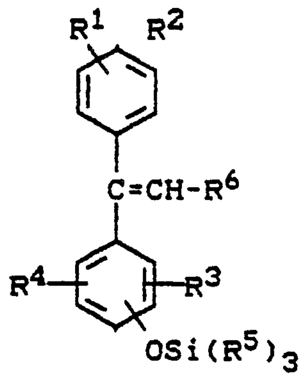

(I)

worin
$R^1$, $R^2$ = H, $C_1$-$C_4$-Alkyl, $OCH_3$
$R^3$ = H, $C_1$-$C_4$-Alkyl, O-$C_1$-$C_4$-Alkyl,
$R^4$ = H, $C_1$-$C_4$-Alkyl,
$R^5$ = $C_1$-$C_4$-Alkyl,
$R^6$ = $C_1$-$C_4$-Alkyl.

EP 0 348 744 A2

## Trialkylsilyloxy-1,1-diphenylethylene und damit hergestellte Polymere

Die Erfindung betrifft Trialkylsilyloxy-1,1-diphenylethylene der allgemeinen Formel I und damit hergestellte neue Polymere mit Aryl-trialkyl-silyl-ether- oder phenolischen Hydroxyl-Endgruppen und ein Verfahren zur Herstellung dieser Polymeren durch anionische Polymerisation.

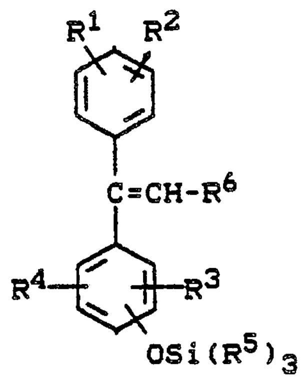

(I)

worin
$R^1$, $R^2$ = H, $C_1$-$C_4$-Alkyl, $OCH_3$
$R^3$ = H, $C_1$-$C_4$-Alkyl, O-$C_1$-$C_4$-Alkyl,
$R^4$ = H, $C_1$-$C_4$-Alkyl,
$R^5$ = $C_1$-$C_4$-Alkyl,
$R^6$ = $C_1$-$C_4$-Alkyl.

Die DE-OS P 37 25 848 beschreibt die Herstellung von polymeren Dihydroxyverbindungen durch anionische Polymerisation geeigneter Verbindungen, gegebenenfalls Verminderung der Reaktivität des Polyanions durch 1,1-Diphenylethylen, Umsetzung mit 2,5-Dimethoxybenzylbromid und Entfernung der Schutzgruppe durch anschließende Etherspaltung mit Trimethyliodsilan, Trimethylchlorsilan und Natriumiodid oder Säuren.

Die Verbindungen eignen sich als Stabilisatoren für Polymere, insbesondere solchen mit ungesättigten Bindungen in der Polymerkette, gegen thermischen, strahleninduzierten und oxidativen Abbau.

Die Umsetzung von sogenannten "lebenden" Polymeren (wie Polystyryllithium) mit weitere funktionelle Gruppen enthaltenden Halogenverbindungen, liefert funktionelle Polymere, ist aber begleitet von einer Anzahl an Nebenreaktionen (vgl. J. Polym. Sci. A 3, 4131 (1965); Polymer 17, 1020 (1976); J. Polym. Sci. B 14, 471 (1976; Adv. Polym. Sci. 56, 72 (1984)). Die Ausbeute an funktionellem Polymer ist daher oftmals nicht befriedigend. Für technische Zwecke ist diese Reaktion daher nicht geeignet.

Gegenstand der Erfindung sind Trialkylsilyloxy-1,1-diphenylethylene der Formel (I), daraus hergestellte Polymere mit Aryl-trialkylsilylether-Endgruppen oder phenolischen Hydroxyl-Endgruppen der Formeln (II) und (III) sowie entsprechende Herstellungsverfahren.

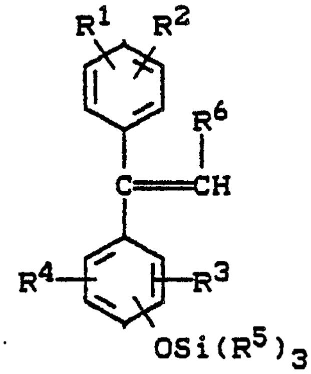

(I)

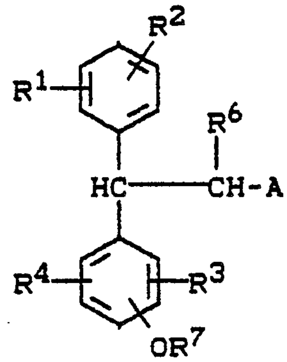

(II)

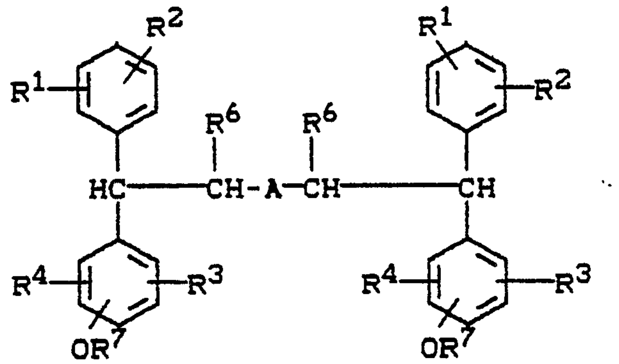

(III)

wobei

A = Polymerisat von anionisch polymerisierbaren Vinylverbindungen,

$R^1$, $R^2$ = H, $C_1$-$C_4$-Alkyl, $OCH_3$,

$R^3$ = H, $C_1$-$C_4$-Alkyl, O-$C_1$-$C_4$-Alkyl,

$R^4$ = H, $C_1$-$C_4$-Alkyl,

$R^5$ = $C_1$-$C_4$-Alkyl,

$R^6$ = H, $C_1$-$C_4$-Alkyl

$R^7$ = H, $Si(R^5)_3$.

Die erfindungsgemäßen Trialkylsilyloxy-1,1-diphenylethylene der Formel I können nach an sich bekannten Verfahren hergestellt werden. Durch alkalikatalysierte thermische Spaltung von 1-Alkyl-1-Phenyl-bis-(hydroxyphenyl)-methan der Formel (IV) sind Hydroxy-1,1- diphenylethylene der Formel (V) zugänglich (DE-AS 1 235 894):

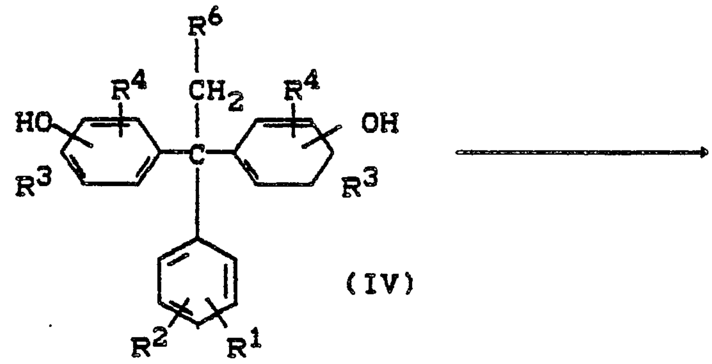

(IV)

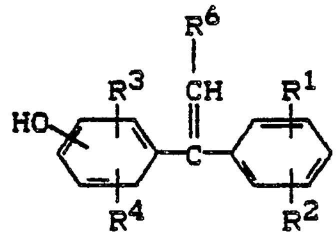

(V)

wobei in Formel IV und V
$R^1$, $R^2$, $R^3$, $R^4$, $R^6$ die oben angegebene Bedeutung haben.

Durch Umsetzung der Hydroxydiphenylethylene der Formel (V) mit Halogensilanen der Formel (VI) in Gegenwart von Säurefängern bilden sich die erfindungsgemäßen Trialkylsilyloxy-1,1-diphenylethylene (I).

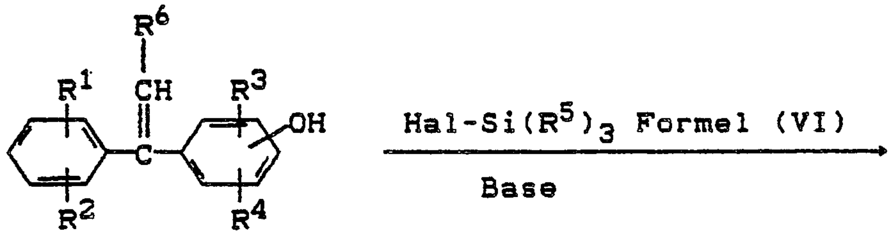


(V)

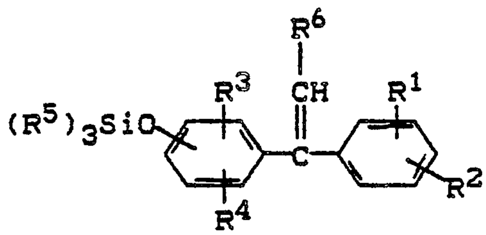

+ Base + H Hal

(I)

Hal = Cl, Br.

Ausgangsprodukt zur Herstellung der erfindungsgemäßen Verbindungen der Formel (I) sind also 1-Alkyl-1-phenyl-bis(hydroxy-phenyl)methane der Formel (IV), worin die Substituenten $R^1$ bis $R^6$ die oben angegebene Bedeutung haben.

Beispiele für Verbindungen der Formel IV sind:
1-Methyl-1-phenyl-bis(4-hydroxyphenyl)methan,
1-Ethyl-1-phenyl-bis(4-hydroxyphenyl)methan,
1-Propyl-1-phenyl-bis(4-hydroxyphenyl)methan,
1-Pentyl-1-phenyl-bis(4-hydroxyphenyl)methan,
1-Methyl-1-(4-methyl-phenyl)-bis(4-hydroxyphenyl)-methan,
1-Methyl-1-(4-methoxyphenyl)-bis-(4-hydroxyphenyl)-methan,
1-Methyl-1-(3,5-dimethylphenyl)-bis-(4-hydroxyphenyl)-methan,

1-Methyl-1-phenyl-bis(2-hydroxy-phenyl)methan,
1-Methyl-1-phenyl-[(4-hydroxyphenyl)-(2′-hydroxyphenyl)]methan,
1-Methyl-1-phenyl-bis(3-methyl-4-hydroxyphenyl)methan,
1-Methyl-1-phenyl-bis(3-methoxy-4-hydroxyphenyl)methan,
1-Methyl-1-phenyl-bis(3,5-dimethyl-4-hydroxyphenyl)methan,
1-Methyl-1-phenyl-bis(3,5-dimethyl-2-hydroxyphenyl)methan.

Bevorzugte Verbindungen der Formel (IV) sind solche mit den Substituenten
$R^1$ = H, $R^2$ = H, $CH_3$, $OCH_3$,
$R^3$ = H, $CH_3$, $OCH_3$,
$R^4$ = H, $CH_3$,
$R^6$ = H, $CH_3$.
Besonders bevorzugt ist $R^1$, $R^2$, $R^3$, $R^4$, $R^6$ Wasserstoff.

Die Verbindungen der Formel (IV) können unter den in DE-AS 1 235 894 angegebenen Bedingungen gespalten werden. Geeignete Halogensilane für die Umsetzung der Verbindungen gemäß Formel (V) zu den erfindungsgemäßen Trialkylsilyloxy-1,1-diphenylethylenen der Formel (I) entsprechen der Formel (VI).

Beispiele für Halogensilane der Formel VI sind:
Trimethylchlorsilan, Triethylbromsilan, Tripropylchlorsilan, Diethylmethylchlorsilan. Bevorzugt sind Trimethylchlorsilan und Triethylchlorsilan, besonders bevorzugt Trimethylchlorsilan.

Verbindungen der Formel (V) und Verbindungen der Formel (VI) können im allgemeinen im Molverhältnis 1:1 (oder mit geringem Überschuß an (VI)) in inerten Lösungsmitteln, wie Kohlenwasserstoffen (Benzin, Ligroin, Heptan, Pentan, Cyclohexan, Benzol, Toluol, Xylol), Halogenkohlenwasserstoffen (Chloroform, Methylenchlorid, Dichlorethan, Chlorbenzol) oder Ethern (Diethylether, Diisopropylether, Dibutylether) umgesetzt werden; bevorzugt sind Kohlenwasserstoffe und die Gegenwart einer Base wie Ammoniak, Triethylamin, Tributylamin, Pyridin, N-Methylimidazol, Chinolin. Man kann aber auch die Verbindung der Formel (V) in ein Salz überführen und dieses in trockener Form mit dem Halogensilan umsetzen. Geeignete Salze sind außer den obengenannten Aminsalzen auch solche des Lithiums, Natriums und Kaliums.

Die Reaktionstemperatur liegt bei 0 bis 120 °C, bevorzugt 10 bis 100 °C.

Die Base muß in mindestens stöchiometrischer Menge bezogen auf (V) zweckmäßig in einem geringen Überschuß eingesetzt werden.

Nach Abtrennung der bei der Umsetzung entstandenen Salze, beispielsweise durch Filtration, können die Verbindungen der Formel (I) direkt weiter verwendet werden. Zusätzliche Reinigung ist durch Destillation möglich.

Geeignete Verbindungen der Formel I zur Herstellung der neuen Polymeren sind beispielsweise:
4-Methyl-4′-trimethylsilyloxy-1,1-diphenylethylen,
4-Ethyl-4′-triethylsilyloxy-1,1-diphenylethylen,
3-Methoxy-4′-trimethylsilyloxy-1,1-diphenylethylen,
4-Isopropyl-4′-triethylsilyloxy-1,1-diphenylethylen,
4-Methyl-2′-trimethylsilyloxy-5′-methyl-1,1-diphenylethylen,
3-Methyl-4′-trimethylsilyloxy-1,1-diphenylethylen,
4-Methoxy-2′-trimethylsilyloxy-3′,5′-dimethyl-1,1-diphenylethylen,
3-Methoxy-4-trimethylsilyloxy-1,1-diphenylethylen,
4-Trimethylsilyloxy-β-methyl-1,1-diphenylethylen,
4-Trimethylsilyloxy-β-propyl-1,1-diphenylethylen,
besonders bevorzugt
4-Trimethylsilyloxy-1,1-diphenylethylen.

Das erfindungsgemäße Verfahren zur Herstellung der polymeren Verbindungen mit Aryl-trimethylsilylether-Endgruppen oder der polymeren Verbindungen mit phenolischen Hydroxyl-Endgruppen gemäß Formeln (II) und (III) erfordert folgende Schritte:

1. Herstellung eines Polyanions durch anionische Polymerisation einer geeigneten Vinylverbindung.
2. Umsetzung des Polyanions mit einer Verbindung der Formel (I)

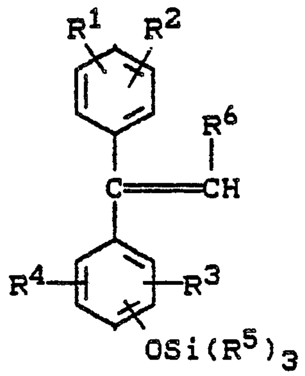

(I)

wobei $R^1$ bis $R^6$ die oben angegebene Bedeutung haben.

3. Neutralisation der Umsetzungsprodukte (die selbst Polyanionen sind) mit protischen Verbindungen unter Bildung der polymeren Verbindungen mit Aryltrisilyloxy-ether-Endgruppen gemäß Formeln (II) und (III) mit $R^7$ = Si $(R^5)_3$ und gegebenenfalls

4. Silyletherspaltung zur Herstellung der polymeren Verbindungen mit phenolischen Hydroxyl-Endgruppen gemäß Formel (II) und (III) mit $R^7$ = H.

In Schritt 1 polymerisiert man anionisch polymerisierbare Vinylverbindungen in aromatischen oder aliphatischen Kohlenwasserstoffen oder einem Ether mit einer Alkylalkalimetall-, Arylalkalimetallverbindung oder einer oligomeren α-Methylstyrol-Alkalimetall-Verbindung unter Ausbildung eines "lebenden" Polyanions oder Polydianions bis zum vollständigen Umsatz des Monomeren. In Schritt 2 setzt man dieses mit Verbindungen der Formel (I) um, wobei sich ein neues Polyanion bzw. -dianion bildet. In Schritt 3 neutralisiert man das Polyanion bzw. -dianion mit protischen Verbindungen und isoliert das Polymere (II) oder (III) mit Aryltrisilyloxy-ether-Endgruppen ($R^7$ = $Si(R^5)_3$).

Zur Herstellung der Polymeren (II) oder (III) mit phenolischen Hydroxyl-Endgruppen ($R^7$ = H) neutralisiert man nach den Schritten 1 und 2 das Polyanion bzw. Dianion im Schritt 3, isoliert gegebenenfalls das Produkt und spaltet den Silylether.

Geeignete anionisch polymerisierbare Verbindungen im Sinne der Erfindung sind z.B. Styrol, p-Methylstyrol, Vinylpyridin, Vinylnaphthalin, Isopropenylnaphthalin, 1,3-Butadien, Isopren oder Mischungen daraus. Bevorzugt sind Styrol, 1,3-Butadien, Isopren oder Mischungen aus Styrol/1,3-Butadien und Styrol/Isopren.

Geeignete aromatische und aliphatische Kohlenwasserstoffe im Sinne der Erfindung sind z.B. Toluol, Benzol, Xylol, Pentan, Hexan, Cyclohexan. Ether im Sinne der Er findung sind z.B. Tetrahydrofuran und Dioxan. Zur Einstellung bestimmter Reaktionsgeschwindigkeiten kann auch ein Gemisch aus aromatischen oder aliphatischen Kohlenwasserstoffen und Ethern verwendet werden.

Zur Herstellung der Polymeren gemäß Formel (II) werden bevorzugt Alkylalkalimetallverbindungen, insbesondere n-Butyl- oder sec.-Butyllithium als Initiatoren eingesetzt.

Zur Herstellung des Polymeren gemäß Formel (III) werden bevorzugt Arylalkalimetallverbindungen, insbesondere Naphthalinnatrium, Naphthalinkalium, oligo-α-Methylstyrylnatrium bzw. oligo-α-Methylstyrylkalium oder 1,3-Phenylen-bis(3-methyl-1-phenyl-pentyliden)bis(lithium) als Initiatoren verwendet.

Die anionisch polymerisierbaren Verbindungen können bei -100 °C bis +80 °C, vorzugsweise -78 °C bis +50 °C polymerisiert werden.

Die "lebenden" Polymeranionen können mit der Verbindung (I) bei -78 °C bis +100 °C, vorzugsweise bei 0 °C bis +50 °C umgesetzt werden. Verbindung (I) wird vorzugsweise in Überschuß bezogen auf Initiator eingesetzt.

Geeignete Neutralisationsmittel für die "lebenden" Polymeranionen sind z.B. schwache anorganische oder organische Säuren, insbesondere Methanol oder Essigsäure.

Da das erfindungsgemäße Verfahren mit "lebenden" Carbanionen arbeitet, sind natürlich Bedingungen einzuhalten, unter denen "lebende" Carbanionen beständig sind, z.B. inerte Atmosphäre, Ausschluß von Luftsauerstoff und -feuchtigkeit.

Die Silylether der Formeln (II) und (III) ($R^7$ = $Si(R^5)_3$ können vorzugsweise durch Ansäuern ihrer Lösungen mit anorganischen Säuren (z.B. Salzsäure) oder organischen Säuren (z.B. p-Toluolsulfonsäure) gespalten werden. Die Spaltung führt man im Temperaturbereich von Zimmertemperatur bis zur Siedetemperatur des Lösungsmittels durch.

Die erfindungsgemäßen Polymeren der Formeln (II) und (III) ($R^7$ = H) können durch Ausfällen des

Polymeren aus der Lösung, vorzugsweise unter Verwendung von Methanol, oder durch Ausdampfen der Polymerlösung in bekannten Ausdampfaggregaten isoliert werden.

Die erfindungsgemäßen Polymeren gemäß Formeln (II) und (III) besitzen (über das Verhältnis Monomerkonzentration zu Initiatorkonzentration steuerbare) Molekulargewichte von 500 g/mol bis 500 000 g/mol, vorzugsweise 1 000 g/mol bis 250 000 g/mol, besonders bevorzugt 1 000 g/mol bis 100 000 g/mol.

Die erfindungsgemäßen Polymeren der Formeln (II) und (III) eignen sich als Stabilisatoren und/oder Gleitmittel für synthetische Polymere. Weiterhin können sie ($R^7$ = H) zum Aufbau von Polykondensaten verwendet werden.

## Beispiele

### 1.1 Herstellung von 1-Methyl-1-phenyl-bis(4-hydroxyphenyl)methan

In ein Gemisch von 240 g (2 Mol) Acetophenon, 940 g (10 Mol) Phenol und 30 g Mercaptopropionsäure leitet man bis zur Sättigung HCl-Gas ein, wobei langsam auf 50 °C erwärmt wird. Man hält 5 h bei diesen Bedingungen, läßt über Nacht stehen und destilliert zunächst im Wasserstrahlvakuum HCl und Wasser und dann das überschüssige Phenol bis zu einer Sumpftemperatur von 120 °C ab. Der verbleibende Rückstand von 510 g wird aus 1250 ml Toluol unter Rückfluß umgelöst, nach Abkühlen abgesaugt und getrocknet: 412 g Fp. 185-7 °C d.s. 72 % d.Th. (MG 580).

### 1.2 Herstellung von 4-Hydroxy-1,1-diphenylethylen

400 g des nach obigen Verfahren erhaltenen Triphenylmethanderivates werden mit 4 g NaOH auf 180 - 220 °C gebracht. Bei 130 - 160 °C und etwa 15 mbar gehen die Spaltprodukte über. Man erhält insgesamt 340 g Destillat und ca. 56 g braunen harzigen Rückstand.

Durch Redestillation wird aus diesem Destillat eine Fraktion von 120 g isoliert, die der Titelverbindung entspricht (45 % d.Th.; MG 196).

### 1.3 Herstellung von 4-Trimethylsilyloxy-1,1-diphenylethylen

100 g (0,51 M) des durch Spaltung gewonnenen 4-Hydroxy-1,1-diphenyl-ethylens werden in 200 ml Cyclohexan gelöst, mit 56 g (0,56 M) Triethylamin versetzt und dazu bei RT bis 50 °C 56 g (0,56 M) Trimethylchlorsilan in ca. 1 h zugetropft. Nach weiteren 2 h bei 50 °C wird von ausgefallenem Salz abgedrückt, der Filterkuchen gut mit Cyclohexan gewaschen und das gesamte Filtrat destilliert. Man erhält nach Redestillation der Hauptfraktion $K_{p1,5}$ 143-8 °C 110 g farblose Flüssigkeit ($n_D^{20}$ = 1,5558), die nach NMR der Titelverbindung entspricht und mindestens 95 %ig ist (67 %. d.Th.).

### 1.4 Umsetzung eines "lebenden" Polystyrolanions mit 4-Trimethylsilyloxy-1,1-diphenylethylen (Herstellung des Polymeren gemäß Formel (II) mit $R^7$ = $Si(R^5)$)

Zu einem Gemisch aus 800 ml Toluol und 100,2 g Styrol wurden unter $N_2$-Atmosphäre 6,5 ml einer 2,5 molaren n-Butyllithium-Lösung (in Hexan) mittels einer Spritze unter schnellem Rühren bei Raumtemperatur gegeben, wobei sich die Lösung orangerot färbte. Die Temperatur wurde anschließend auf 40 °C erhöht. Nach einer Polymerisationszeit von 3 h wurde die Lösung auf Zimmertemperatur gebracht und 45 ml einer Lösung aus 10 g 4-Trimethylsilyloxy-1,1-diphenyl-ethylen und 60 g Toluol mittels einer Spritze zugegeben, wobei sich die Farbe der Lösung nach Dunkelrot veränderte. Die Reaktionszeit betrug 1 h bei Zimmertemperatur. Anschließend wurde das Polymer mit 2 ml Methanol ($N_2$-gesättigt) neutralisiert und durch Fällung in Methanol isoliert.

### 1.5 Spaltung des Silylethers

(Herstellung eines Polymeren gemäß Formel (II) ($R^7$ = H)

Zu einer Lösung von 100 g des im obengenannten Beispiel beschriebenen Polymeren in 800 ml Tetrahydrofuran wurden bei 40 °C 20 ml einer 10 %igen wäßrigen Salzsäure gegeben. Die Reaktionszeit betrug 1 h. Anschließend wurde das Polymere in Methanol gefällt, neutral gewaschen und getrocknet.

GPC-Analyse (Polystyrol-Eichung): $M_n$ = 6 500 g/mol,
$M_w$ = 7.900 g/mol.

2.1 Umsetzung eines "lebenden" Polystyrol-di-anions mit 4-Trimethyl-silyloxy-1,1-diphenylethylen (Herstellung des Polymeren gemäß Formel (III) mit $R^7$ = Si $(R^5)_3$)

Zu 0,55 g (0,024 mol) Natrium in 250 ml Tetrahydrofuran werden 4 g (0,031 mol) Naphthalin unter $N_2$-Atmosphäre gegeben, wobei sich die Lösung intensiv grün färbte. Nach ca. 2 h bei Zimmertemperatur hatte sich das Natrium vollständig zu Naphthalin-Natrium umgesetzt. Anschließend wurden 50 g Styrol mit einer Spritze während 2 h zugetropft, wobei die Farbe nach rot umschlug. Nach weiteren 30 min wurde eine Lösung aus 8 g (0,03 mol) 4-Trimethylsilyloxy-1,1-diphenylethylen und 15 ml Toluol mit einer Spritze zugegeben. Nach einer Reaktionszeit von 2 h bei Zimmertemperatur wurde das Polymere mit Methanol ($N_2$ gesättigt) neutralisiert und durch Fällung in Methanol isoliert.

2.2 Spaltung des Silylethers (Herstellung des Polymeren gemäß Formel (III) mit $R^7$ = H)

Zu einer Lösung von 45 g des im obengenannten Beispiel beschriebenen Polymeren in 350 ml Tetrahydrofuran wurden bei 40 °C 35 ml 10 %igen wäßrige Salzsäure gegeben. Nach einer Reaktionszeit von einer Stunde wurde das Polymere in Methanol gefällt, isoliert, neutral gewaschen und getrocknet.

**Ansprüche**

1. Trialkylsilyloxy-1,1-diphenylethylene der Formel (I)

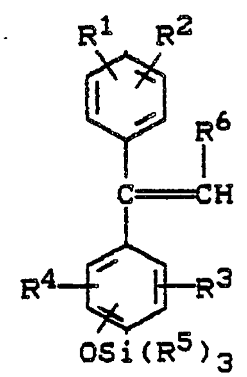

(I)

worin
$R^1$, $R^2$ = H, $C_1$-$C_4$-Alkyl, $OCH_3$,
$R^3$ = H, $C_1$-$C_4$-Alkyl, O-$C_1$-$C_4$-Alkyl,
$R^4$ = H, $C_1$-$C_4$-Alkyl,
$R^5$ = $C_1$-$C_4$-Alkyl,
$R^6$ = H, $C_1$-$C_4$-Alkyl bedeuten.

2. Polymere Verbindungen mit Aryltrialkylsilyl-ether-Endgruppen oder phenolischen Hydroxyl-Endgruppen der Formeln (II) und (III)

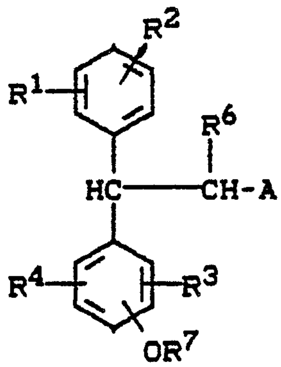

(II)

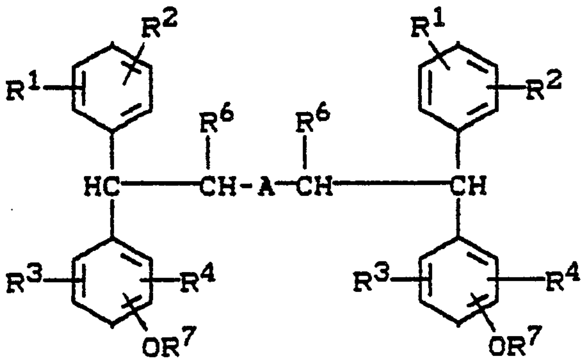

(III)

wobei
A ein Polymerisat von anionisch polymerisierbaren Vinylverbindungen ist und
$R^1$, $R^2$, $R^3$, $R^4$, $R^5$, $R^6$ die in Anspruch 1 angegebene Bedeutung haben und $R^7$ Wasserstoff oder $-Si(R^5)_3$ bedeutet.

3. Trialkylsilyloxy-1,1-diphenylethylene gemäß Anspruch 1, polymere Verbindungen mit Aryltrialkylsilylether-Endgruppen und mit phenolischen Hydroxyl- Endgruppen gemäß Anspruch 2, worin
$R^1$ = H; $R^2$ = H, $CH_3$, $OCH_3$;
$R^4$ = H, $CH_3$; $R^5$ = $C_1$-$C_4$-Alkyl und
$R^6$ = H, $CH_3$ bedeuten.

4. Trialkylsilyloxy-1,1-diphenylethylene gemäß Anspruch 1, polymere Verbindungen mit Aryltrialkylsilylether-Endgruppen und mit phenolischen Hydroxylendgruppen gemäß Anspruch 2, worin
$R^1$, $R^2$, $R^3$, $R^4$ und $R^6$ = Wasserstoff und $R^5$ = $CH_3$ bedeuten.

5. Polymere Verbindungen mit Aryltrialkylsilylether-Endgruppen 2 und mit phenolischen Hydroxyl-Endgruppen gemäß Anspruch 2, worin A ein Polymer aufgebaut aus Styrol, p-Methylstyrol, Vinylnaphthalin, Isopropenylnaphthalin, Vinylpyridin, 1,3-Butadien, Isopren oder Mischungen daraus ist.

6. Verfahren zur Herstellung der polymeren Verbindungen mit Aryltrialkylsilylether-Endgruppen gemäß Anspruch 2, dadurch gekennzichnet, daß man

1. Monomere anionisch polymerisiert,
2, die gemäß 1 gebildeten "lebenden" Polymeranionen mit einer Verbindung der Formel (I) umsetzt,
3. die gemäß 2 entstandenen Polymeranionen neutralisiert und das Polymer isoliert.

7. Verfahren zur Herstellung der polymeren Verbindungen mit phenolischen Hydroxyl-Endgruppen gemäß Anspruch 2, dadurch gekennzeichnet, daß man

1. Monomere anionisch polymerisiert,
2. die gemäß 1 gebildeten "lebenden" Polymeranionen mit einer Verbindung der Formel I umsetzt,
3. die gemäß 2 entnommenden Polymeranionen neutralisiert, gegebenenfalls das Polymere isoliert und den Silylether spaltet.